(19) Europäisches Patentamt
European Patent Office
Office européen des brevets

(11) Publication number: **0 142 080**
**B1**

(12) # EUROPEAN PATENT SPECIFICATION

(45) Date of publication of patent specification: **25.01.89**

(51) Int. Cl.$^4$: **A 61 J 1/00**

(21) Application number: **84112829.1**

(22) Date of filing: **24.10.84**

(54) **Storage systems.**

(30) Priority: **25.10.83 GB 8328494**

(43) Date of publication of application:
**22.05.85 Bulletin 85/21**

(45) Publication of the grant of the patent:
**25.01.89 Bulletin 89/04**

(84) Designated Contracting States:
**AT DE FR GB NL**

(56) References cited:
**EP-A-0 093 381**
**DE-A-2 026 086**
**DE-A-2 642 621**
**US-A-3 055 367**
**US-A-3 874 384**
**US-A-4 223 675**

(73) Proprietor: **THE WELLCOME FOUNDATION LIMITED**
**183-193 Euston Road**
**London NW1 2BP (GB)**

(72) Inventor: **Hyde, Richard Martin**
**85 Croham Road**
**Croydon Surrey (GB)**
Inventor: **Livingstone, David John**
**38 Mackenzie Road**
**Beckenham Kent (GB)**

(74) Representative: **Sandmair, Kurt, Dr. et al**
**Patentanwälte Schwabe, Sandmair, Marx**
**Stuntzstrasse 16**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

This invention relates to containers for blood and having means for adding to contained blood, an agent for improving the ability of blood cells to liberate oxygen. Any agent possessing such a property is termed herein, 'an oxygen liberation enhancer'.

European Patent Application EP—A—0093381, published Nov. 9, 1983, describes compounds of formula (I).

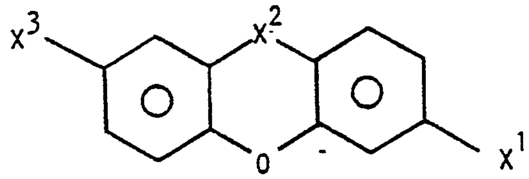

(I)

as hereinafter defined, which are of value in both human and veterinary medicine in enabling an increase in oxygen liberation from oxyhaemoglobin.

Human haemoglobins are composed of four polypeptide (globin) chains which together comprise the haemoglobin tetramer; each chain surrounds a porphyrin molecule (haem) containing a central iron atom to which oxygen is reversibly bound. When a graph is plotted of the percentage saturation of haemoglobin with oxygen (ordinate) against the partial pressure of oxygen, sometimes called the oxygen tension (abscissa) a characteristic sigmoid curve is obtained, the oxygen-dissociation curve. A displacement of the curve to the *left* of the "normal" position would indicate an increase in the affinity for oxygen of the haemoglobin, a lower oxygen tension then being required to produce a given percentage saturation, while conversely a displacement to the *right* would indicate a reduced oxygen affinity and hence a requirement for a higher oxygen tension for a given percentage saturation. It follows that upon displacement of the curve to the right there is a reduction in the percentage of oxyhaemoglobin present at any given oxygen tension and hence an increased liberation of oxygen upon a fall in tension to any given level.

The compounds of formula (I), as hereinafter defined, induce an *in vitro* right-displacement of the oxygen-dissociation curve

a) of fresh whole human blood, and

b) of whole human blood subjected to a procedure (incubation overnight at 37°C) producing changes similar to those seen in blood stored for extended periods by transfusion services and the like (*vide infra*).

The compounds of formula (I) are thus examples of oxygen liberation enhancers, as hereinbefore defined, and have applications *in vitro* in circumstances where it is desirable to provide a more effective delivery of oxygen to the tissues of the (eventual) recipient.

A major *in vitro* application for the compounds is in the field of blood storage. As is well known there is an ever-present need for human blood by medical services throughout the world for use in a wide variety of life-supportive measures. For the majority of recipients whole blood is the only acceptable material as although a number of alternatives have been proposed, none has been found to be a completely satisfactory substitute. The collection, storage and distribution of blood is generally catered for by specialist transfusion services or "blood banks" as exemplified by the National Blood Transfusion Service in the United Kingdom. The effective and economic operation of such agencies is however in large measure governed by the fact that whole blood or, more correctly, the red blood cells (erythrocytes) therein, even when stored as customarily at 4°C, have a very limited "shelf-life" generally accepted as 21 days after removal from the donor. By the end of this period they are considered unsuitable for transfusion and are discarded and there has been considerable research into methods for prolonging the useful life of stored red blood cells and thus reducing the wastage due to "outdating".

A particular feature of the ageing of red blood cells during storage is a progressive left-displacement of the oxygen-dissociation curve associated with a fall in intracellular levels of 2,3-diphosphoglycerate (DPG), the erythrocytes' natural right-displacement effector. As previously indicated a left-displacement is associated with the haemoglobin having an increased affinity for oxygen and hence ageing cells exhibit a progressive decline in their ability to deliver oxygen to the peripheral tissues following transfusion. Although this property is gradually restored within the recipient's body as DPG levels recover, the initial deficiency is of literally vital significance as the prime reason for transfusing red blood cells (as distinct from just plasma) is generally the immediate prevention or reversal of tissue hypoxia (*vide supra*). The compounds of formula (I), in displacing the oxygen-dissociation curve to the right, are of value not only in maintaining the oxygen-delivery capacity of stored red blood cells, thus improving their quality and providing improved oxygen-delivery in the immediate post-transfusion period, but also in prolonging their useful storage life. In order to exclude pathogens, red blood cells are normally stored in sterile sealed containers, either in the form of whole blood, a blood cell preparation, or as a packed cell mass (when the plasma is held separately). In the latter case, the cells may be transfused resuspended in plasma or in a plasma substitute. In these containers, the cells are often stored in the absence of air because of the risk of air embolism during administration to a patient. Such an embolus causes severe pain and can be fatal. It is therefore important that if an oxygen transport enhancer is added to stored cells, then sterility and preferably also the absence of air be maintained.

Normally when blood is taken from a donor, either for transfusion as whole blood or prior to extraction of the cells, then an anti-coagulant

must be present in the receiving container to prevent clotting. An exhancer need not necessarily be added immediately after the blood is obtained from the donor because as indicated above, the decline in the oxygen transport ability of the red blood cells is progressive. Moreover, administration of an enhancer to a recipient in either whole blood or blood cell preparations is desirably an option to be exercised at the discretion of the attendant physician.

From US—A—3 874 384 a blood storage unit is known comprising a first container for receiving and storing blood and a second container containing a substance which enables the increase in oxygen liberation from oxyhaemoglobin, and wherein the contents of the first and second containers normally being separated by a means, which enables continuity to be established between the interiors of the containers when required.

We have now devised a containment system for whole blood or red blood-cell preparations which enables maintenance of sterility and the exclusion of air, yet also permits discretionary addition of an oxygen transport enhancer of formula I to blood or a red blood cell preparation when stored therein.

Thus the present invention provides a containment system comprising a first sterile sealed container having means enabling aseptic ingress of blood and containing an anti-coagulant, and having connected thereto a second sterile sealed container containing a substance which enables an increase in oxygen liberation from oxyhaemoglobin, the contents of the first and second containers normally being separated by a means configured to enable continuity between the interiors of the containers to be established when required, characterized in that the substance in the second container is a compound of formula (I) as hereinbefore defined, wherein

$X^1$ is a carboxyl or 5-tetrazolyl group
$X^2$ is carbonyl or methylene
$X^3$ is hydroxyl or a group $—X^4(C_nH_{2n})X^5$
*where*
$X^4$ is oxygen or sulphur
$X^5$ is hydrogen or a group $—OX^6$
*where*
$X^6$ is hydrogen or alkanoyl or 1 to 4 carbon atoms or a group $—(C_mH_{2m})X^7$
*where*
$X^7$ is hydrogen or a group $—OX^8$
*where*
$X^8$ is hydrogen or alkanoyl or 1 to 4 carbon atoms and m and n are each, independently, an integer from 1 to 4, or salts thereof, *provided that* when $X^5$ is a group $—OX^6$ *then* n is always greater than 1 *and* $X^4$ and $X^5$ are attached to different carbon atoms;
*and that* when $X^7$ is a group $—OX^8$ *then* m is always greater than 1 *and* no single carbon atom in the radical $—(C_mH_{2m})—$ is attached to two oxygen atoms.

As herein understood, the 5-tetrazolyl group is having the structural formula

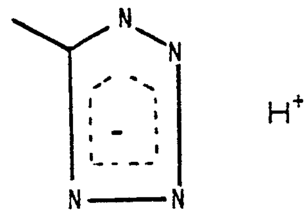

which thus embraces both tautomeric forms thereof respectively identifiable as 5-[1H]-tetrazolyl and 5-[2H]-tetrazolyl.

When m and/or n is 3 or 4 the moieties $—(C_mH_{2m})—$ and $—(C_nH_{2n})—$ can be linear or branched.

Preferred compounds of formula (I) include 2-ethoxy-6-(5-tetrazolyl)xanthone, 2-(2-hydroxyethoxy)-6-(5-tetrazolyl)xanthone and salts of these compounds.

In the salts of the compounds of formula (I) the biological activity resides in the tricyclic (anion) moiety and the identity of the cation is of less importance although for use in medicine it is preferably pharmacologically acceptable to the eventual recipient. Suitable salts include ammonium salts, alkali metal salts such as sodium and potassium salts, alkaline earth salts such as magnesium and calcium salts, and salts formed with organic bases, for example, amine salts derived from mono-, di- or tri(lower alkyl) or (lower alkanol)amines such as triethanolamine and diethylaminethylamine, and salts with heterocyclic amines such as piperidine, pyridine, piperazine and morpholine.

The compounds of formula (I) and their salts may be prepared by those methods known in the art of the synthesis of compounds of analogous structure and in this regard reference is made, by way of illustration only, to the following standard texts:—

(i) *"Protective Groups in Organic Chemistry"* ed. J. F. W. McOmie, Plenum Press (1973), ISBN 0-306-30717-0;

(ii) *"Compendium of Organic Synthetic Methods"* ed. I. T. Harrison and S. Harrison, Wiley-Interscience, Vol. I (1971) ISBN 0-471-35550-X, Vol II (1974) ISBN 0-471-35551-8 and Vol. III (ed. L. S. Hegedus and L. Wade) (1977) ISBN 0-471-36752-4; and

(iii) Rodd's *"Chemistry of Carbon Compounds"* second edition, Elsevier Publishing Company.

All references identified hereinabove or in the following are hereby incorporated herein by reference thereto.

The oxygen liberation enhancer i.e. the compound of formula (I) as hereinbefore defined) may be provided within the second container as a suitable 'formulation' such as an aqueous solution thereof, optionally with solubilising and/or stabilising ingredients.

The amount of oxygen liberation enhancer included in the second container must be chosen relative to the amount of whole blood or blood preparation to be held in the first container. The amount included in the second container will

generally be such that when mixed with the whole blood or a blood preparation in the first container, its concentration will be in the range 0.1 mM to 50 mM, more generally in the range 0.5 mM to 25 mM and most often in the range 1mM to 10 mM. An optimum concentration is 3mM. As indicated above, the precise weight of compound will vary with the size of the first container. Moreover, when the compound is to be added to a packed red blood cell mass (as opposed to whole blood or another red blood cell preparation), the amount of compound will be appropriately less. The weight of compound will of course vary also with the identity of the compound. However, a first container which corresponds to a blood container of a standard type (*vide infra*) will require *ca.* 0.5 g (calculated as the acid) to provide the optimum 3mM concentration in whole blood.

In normal use, the first container may for example contain whole blood, a packed blood-cell mass for resuspension in plasma or a plasma substitute, or blood-cells when so resuspended. An example of a plasma substitute referred to above is that which for convenience is designated by the abbreviation SAG (Salt Adenine Glucose). The anticoagulant may be any of those known to persons skilled in the art, for example Acid Citrate Dextrose (ACD) or Citrate Phosphate Dextrose (CPD).

The first container may for example take the form of a bottle or bag of the type customarily used for blood storage. Bottles of this type are conventionally formed of glass and have a thick rubber septum or bung sealing the neck thereof. Tubing for administration transfusion of blood to a patient may be connected to the bottle via a hollow needle pushed through the septum or bung. Another similar needle may also be pushed through the septum or bung and connected to a length of tubing terminating in a filter (e.g. of cotton-wool). During transfusion, the filter is placed above the blood level in the bottle to permit entry of air to the bottle in order to displace transfused blood. Bags of this type are normally formed of a plastics material and have one or more, e.g. three sealed sterile ports, therein. One of these ports is normally connected to a flexible plastics tube which terminates in a needle for receiving blood from a donor. Any other sealed sterile ports may take the form of a protruding plastics tube covered by a tearable sleeve. One of the other ports later may be connected to a length of tubing to enable transfusion. The bag is normally provided in collapsed form so as to minimise the air content thereof.

When it is desired to separate components of whole blood, such a bag may be connected via a port thereof and one or more lengths of plastics tubing, to a plurality of further containers, e.g. bags of like or similar construction. Such a further container may contain a plasma substitute such as SAG to receive separated blood cells. A network of this kind, comprising, two or more bags interconnected by plastics tubing is hereinbefore termed a separation network.

Thus the first container may comprise a single bottle or bag as described above or any bag being a member of a separation network as hereinbefore defined. The second container may for example comprise a further bag or bottle of the kinds described above. The contents of the first and second containers may normally be separated by a closed passage inter-connecting said containers. This passage may for example be provided by a length of tubing, e.g. of a plastics material. The closure of the passage may be provided by means described further hereinbelow. Two bags which are members of a separation network may comprise the first and second containers respectively. The closed passage connecting the first and second chambers is then provided by the plastics tubing connecting the two bags within the network. The bag in the network which is the second container may also contain a plasma substitute such as SAG, for the reason indicated above.

When the first container is a bag, it may be incorporated in a unitary construction wherein the first container, second container and the passage are provided within a single piece of webbing, for example of plastics material.

Where the closure of the passage connecting the first and second chambers is provided by a construction of flexible (e.g. plastics) material such as tubing or a channel within a section of webbing, the closure of the passage may be provided by a removable compression clip external of the construction. Other means effecting said closure will of course be apparent to those skilled in the art. For example there may be provided within the passage a frangible membrane. In use, the membrane may be broken by application of manual pressure, external of the second container, thereby causing the contents thereof to exert a force on the membrane, sufficient to cause the latter to break. Alternatively, where such a membrane is provided within a passage which comprises a length of tubing, said tubing may be provided with a longitudinally resilient section (for example having flexible ribbing) in the vicinity of the membrane. A suitable member such as a needle may be provided within the passage adjacent the membrane so that manual longitudinal movement of the tubing causes the member to pierce the membrane. Other suitable closures include taps and valves, particularly when inserted in-line in a length of tubing. The opening of such a tap or valve permitting passage of contents of the second container to the first container.

The invention will now be illustrated by exemplary embodiments with reference to the accompanying drawings in which:—

Figure 1 shows in plan view, a bag of known type for the storage of whole blood or of blood-cell preparations;

Figure 2 shows an end elevation of the bag of known type shown in Figure 1, viewed along the line II—II;

Figure 3 shows a first embodiment of a containment system according to the present invention;

Figure 4 shows a second embodiment of a containment system according to the present invention;

Figure 5 shows containment system according to the present invention and comprising a separation network; and

Figure 6 shows a passage arrangement for use in various embodiments of the present invention.

Figure 1 shows a bag 1 of a type known in the art, used for storage and transfusion of blood. The bag is formed of polyethylene and when normally provided for use, contains a small amount of an anticoagulant. In this state the bag appears substantially flat when viewed in a direction normal to lower edge 3 (see Figure 2). The bag comprises chamber 5 bounded by walls 7 and 9. The chamber is surrounded by peripheral webbing 11. Openings are provided in the top of the bag by three tubular ports 13, 15 and 17. The port 13 is connected to a length of polyethylene tubing which terminates in a stainless steel hypodermic needle 21. Prior to use, in order to seal the bag and tubing, preserve sterility, and for safety, the needle is covered with a rubber sheath (not shown). The tubular ports 15 and 17 are encased within tabs 23 and 25 respectively. The tabs comprise two parallel substantially flat members which are heat-sealed together. The tops of the flat members are provided with ribbed grips 27 and 29 for use as described hereinafter. The peripheral webbing is provided at the bottom with a slot 31. The top of the webbing terminates in flanges 35 which are residues of manufacture.

The tubing 19 and needle 21 are used in the taking of blood from a donor and are sometimes termed the 'receiving set'. The donor lies prostrate and the needle is inserted in an arm vein. The bag is laid below the level of the donor, the force of whose heartbeat together with gravity, serve to fill the bag with blood via the tubing. As the bag fills, the walls 7 and 9 expand apart. When the bag is full, the tubing 19 is sealed. This is done either by folding the tubing back on itself and clamping it with a metal spring-clip, or by squeezing the tubing with hot metal tongs to effect a heat seal.

The bag is stored, normally at *ca.* 4°C until required. For administration (transfusion) of the contents to a patient, one of the tab-seals 23 or 25 is broken by holding the ribbed grips 27 or 29 and prising-apart the flat members. A length of tubing terminating in a hypodermic needle is then connected by push-in fit, to the relevant port 15 or 17. Such tubing and needle are similar to those of the receiving set and are sometimes termed the 'giving set'. Atmospheric pressure acting on the walls 7 and 9 of the bag then forces blood through the tubing and needle to expel the air therein. The needle is inserted in a suitable vein in the patient. The bag is then inverted and suspended above the level of the patient, by slot 31, from a drip-stand. The combination of gravity and atmospheric pressure acting open the bag walls ensures that blood flows from the bag into the patient.

One particular embodiment of the invention is shown in Figure 3 which illustrates a bag 37. This bag is constructed exactly as the known bag shown in Figures 1 and 2, except that it is provided with a further tubular port 39. The port 39 is connected to a length of polyethylene tubing which is sealed at 43 by being folded back on itself and clamped with a metal spring-clip 45. The end 47 of the tubing remote from the bag 37 is connected to polyethylene side-bag 49 containing an oxygen liberation enhancer such as aqueous solution of 2-ethoxy-6-(5-tetrazolyl)xanthone, 2-(2-hydroxyethoxy)-6-(5-tetrazolyl)xanthone, or any pharmacologically acceptable salt of these compounds. The weight of compound in such a solution is 0.5 g dissolved in 5 ml of sterile water.

The bag is used exactly as the known bag of Figures 1 and 2, except that if desired, after the bag has been filled and before transfusion, the metal clip may be removed and the side-bag squeezed to transfer the oxygen liberation enhancer to the bag 37 containing blood. Squeezing or shaking of the bag be necessary to ensure mixing of the enhancer with the blood.

The bag 53 shown in the embodiment illustrated in Figure 4 is again identical to the above-described known bag, except that there is provided within a portion 55 of the peripheral webbing, a 'bubble' 57 containing an oxygen liberation enhancer. The amount and identity of enhancer are exactly the same as for the embodiment of Figure 3. The enhancer is retained within the bubble by frangible membrane 59. Use of the bag is the same as for the previous embodiment except that mixture of the enhancer with stored blood is effected by squeezing the bubble. The contents of the bubble thus exert a force on the membrane causing breakage thereof. If necessary, mixing is facilitated by shaking or squeezing.

Figure 5 illustrates a separation network 61 according to the present invention. The network comprises bags 63, 65, 67 and 69, each being substantially identical in construction to the known bag. The bag 63 contains a quantity of anti-coagulant. The bag 65 contains a mixture 70 of a plasma substitute such as SAG and an oxygen liberation enhancer of the type described in the previous embodiments. The amount of enhancer is determined as before, assuming a blood volume equivalent to the volume of bag 63 when full. The amount of plasma substitute is somewhat less than the full volume of bag 63. The bags of the network are interconnected by lengths 71, 73, 75, 79 and 81 of polyethylene tubing and unions 83 and 85. The lengths of tubing 73, 75, 79 and 81 are each folded and sealed with respective metal clips 87, 89, 91 and 93 in the manner previously described.

In use, bag 63 is filled with blood and the tubing of the giving set is sealed as hereinbefore described. The whole network is then centrifuged so as to cause separation of the blood into two layers, the upper layer containing blood platelets

suspended in plasma and the lower layer containing a compacted mass of blood cells. Clips 89 and 91 are then removed and the upper-layer squeezed from bag 63 into bag 67, preferably leaving a small quantity of plasma with the cells in bag 63. Conveniently, this squeezing may be effected with a commercially available device comprising a pair of sprung plates, hinged in a V-configuration.

The lengths of bags 75 and 79 are then resealed with clips 89 and 91 and the whole network is again centrifuged so as to cause separation of the contents of bag 67 into an upper-layer of plasma and a lower layer comprising a compacted mass of blood platelets. Clips 91 and 95 are then removed and the upper plasma layer squeezed into bag 69, preferably leaving a small quantity of plasma with the platelets in bag 67. Lengths of tubing 79 and 81 are then resealed with clips 91 and 93. Clip 87 is then removed. The contents 70 of bag 65 are squeezed into bag 63 to create a blood preparation comprising blood-cells, SAG and oxygen liberation enhancer. The tube 71 can then be severed and sealed, and bag 63 stored for future use. Severence of tubes 79 and 81 on the side of clips 91 and 93 remote from bags 67 and 69 allows separate storage of blood platelets and plasma in bags 67 and 69 respectively.

In an alternative embodiment, bag 65 contains only an oxygen liberation enhancer and thus its size may be appropriately smaller. In this case, after separation of the plasma and platelets, clips 89 and 93 are removed and the plasma squeezed from bag 69 back into bag 63 to resuspend the cells. Tubing 75 can then be resealed with clip 89 so that severence of the tubing between clip 89 and union 85 permits storage together of bags 63 and 65. Enhancer may be added to the cell suspension, either immediately or when desired, by removal of clip 87 and squeezing of bag 65. Subsequently, tubing 71 may be severed and sealed in the normal way, and bag 65 discarded.

In some embodiments, the enhancer may be provided in a side-bag directly connected (e.g. via port 97) to bag 63 in the manner of the embodiment of Figure 3. Alternatively, as in the embodiment of Figure 4, the enhancer may be provided in a bubble within the peripheral webbing 99 of bag 63. In such cases, the enhancer may be added when desired to the blood, blood cell preparation, or blood cell-in-plasma suspension as appropriate, contained in bag 63.

In variations of the above separation network embodiments, one of bags 67 and 69 may be omitted. This for example may be appropriate when only a single 'hard spin' centrifugation is to be performed. This is done when it is desired to precipitate cells and platelets together. The plasma can then be squeezed-off and if desired, *ca.* 100 ml left with, or returned to the packed mass of cells and platelets. Thus, the enhancer may be added when desired to the packed cell mass (optionally mixed with a small amount of plasma).

In general, closure of the passage between the first and second containers may be provided either by a spring clip as in the embodiment of Figure 3 or a frangible membrane as in the embodiment of Figure 4. However, where the passage is provided by a length of tubing, advantageously the closure may be of the type shown in Figure 6. A length of tubing 99 which forms at least part of the passage between the first and second containers is provided with an internal frangible membrane 101 forming a closure thereof. Adjacent the membrane and within the tubing is a hollow needle 103 held in place by support 105 contacting the internal wall 107 of the tubing. In the region between the membrane and needle support, the tubing is provided with circumferential ribbing 109 endowing the tubing with longitudinal resilience. To open the passage and allow transfer of oxygen liberation enhancer from the second to the first container, the user manually grips the tubing on either side of the ribbing and pushes to cause relative movement of the needle and membrane towards one another. The membrane is thus broken permitting passage of fluid.

## Claims

1. A containment system comprising a first sterile sealed container (1, 37) having means (19, 21) enabling aseptic ingress of blood and containing an anti-coagulant, and having connected thereto a second sterile sealed container (49) containing a substance (51) which enables an increase in oxygen liberation from oxyhaemoglobin, the contents of the first and second containers normally being separated by a means (41, 45, 47) configured to enable continuity between the interiors of the containers to be established when required, characterized in that the substance (51) in the second container is a compound of formula (I)

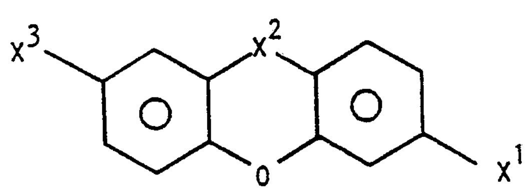

(I)

wherein

$X^1$ is a carboxyl or 5-tetrazolyl group

$X^2$ is carbonyl or methylene

$X^3$ is hydroxyl or a group $-X^4(C_nH_{2n})X^5$

*where*

$X^4$ is oxygen or sulphur

$X^5$ is hydrogen or a group $-OX^6$

*where*

$X^6$ is hydrogen or alkanoyl of 1 to 4 carbon atoms or a group $-(C_mH_{2m})X^7$

*where*

$X^7$ is hydrogen or a group $-OX^8$

*where*

$X^8$ is hydrogen or alkanoyl of 1 to 4 carbon atoms and m and n are each, independently, an integer from 1 to 4,

*provided that* when $X^5$ is a group $—OX^6$ *then* n is always greater than 1 *and* $X^4$ and $X^5$ are attached to different carbon atoms;
*and that* when $X^7$ is a group $—OX^8$ *then* m is always greater than 1 *and* no single carbon atom in the radical $—(C_mH_{2m})—$ is attached to two oxygen atoms;
or a salt thereof.

2. A containment system as claimed in claim 1, characterized in that the first container (1, 37) is in the form of a bottle or a bag.

3. A containment system as claimed in claim 1 or claim 2, characterized in that the first container (1, 37) is in the form of a bag which is a member of a separation network.

4. A containment system according to any preceding claim, characterized in that the second container (49) is in the form of a further bag or bottle.

5. A containment system as claimed in claim 4, wherein the first (1, 37) and second (49) containers are normally separated by a closed passage (41, 47) inter-connecting said containers.

6. A containment system as claimed in claim 5, characterized in that the closed passage (41, 47) comprises a length of tubing.

7. A containment system as claimed in any of claims 3-6, characterized in that the first (1, 37) and second (49) containers are respective members of a separation network.

8. A containment system as claimed in any preceding claim, characterized in that the second container (49) also contains a plasma substitute.

9. A containment system as claimed in claim 1, characterized in that the first container (1, 37) is a bag incorporated in a unitary construction wherein the first container (1, 37), second container (49) and a closed passage (41, 47) interconnecting said containers are provided within a single piece of webbing.

10. A containment system as claimed in claim 1, characterized in that the first container (1, 37) and the second container (49) are interconnected by a passage (41, 47) provided by a construction of flexible material and closure of the passage is provided by a removable compression clip (45) external of the construction.

11. A containment system as claimed in claim 1, characterized in that the first container (1, 37) and the second container (49) are interconnected by a passage (41, 47) provided by a construction of flexible material and closure of the passage is provided by a frangible membrane (59).

12. A containment system as claimed in claim 11, characterized in that the passage (41, 47) comprises a length of tubing having a longitudinally resilient section in the vicinity of the membrane (59) and a member for piercing the membrane is provided within the passage and adjacent the membrane.

13. A containment system according to any preceding claim, characterized in that the first container (1, 37) contains whole blood, a packed blood cell mass, or blood cells suspended in plasma or in a plasma substitute.

14. A containment system according to any preceding claim, characterized in that the oxygen liberation enhancer is 2-ethoxy-6-(5-tetrazolyl)-xanthone, 2-(2-hydroxyethoxy)-6-(5-tetrazolyl)-xanthone or a salt of either compound.

**Patentansprüche**

1. Ein Behältersystem, umfassend einen ersten sterilen, abgedichteten Behälter (1,37) mit Mitteln (19,21) die ein aseptisches Eindrigen von Blut gestatten und ein Antikoagulanzmittel enthalten, und mit dem ein zweiter abgedichteter Behälter (49) verbunden ist, enthaltend eine Substanz (51) welche eine Zunahme der Sauerstoffreisetzung aus Oxyhämoglobin gestattet, wobei die Inhalte des ersten und zweiten Behälters üblicherweise durch Mittel (41,45,47) abgetrennt sind, die so angeordnet sind, daß eine Kontinuität zwischen den Inhalten der Behälter-falls erwünschteinrichtbar ist,
dadurch gekennzeichnet, daß die in dem zweiten Behälter enthaltene Substanz (51) eine Verbindung der Formel (I) ist:

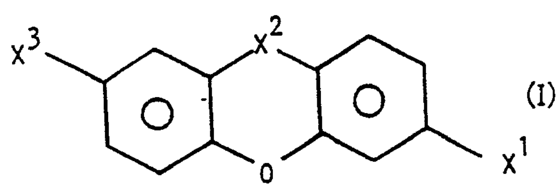

(I)

wobei
$X^1$ eine Carboxyl- oder eine 5-Tetrazolylgruppe, $X^2$ eine Carbonyl- oder Methylengruppe, $X^3$ eine Hydroxylgruppe oder eine Gruppe $—X^4(C_nH_{2n})X^5$ bedeuten und $X^4$ Sauerstoff oder Schwefel und $X^5$ Wasserstoff oder eine Gruppe $—OX^6$ bedeuten, und $X^6$ Wasserstoff oder ein Alkanoyl mit ein bis vier Kohlenstoffatomen oder einer Gruppe $—(C_mH_{2m})X^7$ bedeutet und $X^7$ Wasserstoff oder eine Gruppe $—OX^8$ bedeutet, wobei $X^8$ Wasserstoff oder ein Alkanoyl mit ein bis vier Kohlenstoffatomen bedeutet und m und n unabhängig von einander eine ganze Zahl von 1 bis 4 bedeuten, vorausgesetzt, falls $X^5$ eine Gruppe $OX^6$ ist, ist n immer grösser als 1 und $X^4$ und $X^5$ sind an verschiedene Kohlenstoffatome gebunden, und falls $X^7$ eine Gruppe $—OX^8$ bedeutet, ist m immer größer als 1 und kein einzelnes Kohlenstoffatom in dem Radikal $—(C_mH_{2m})—$ ist mit zwei Sauerstoffatomen verbunden, oder ein Salz dieser Verbindung.

2. Behältersystem nach Anspruch 1, dadurch gekennzeichnet, daß der erste Behälter (1,37) die Gestalt einer Flasche oder eines Beutels hat.

3. Behältersystem nach Anspruch 1 oder 2, dadurch gekennzeichnet, daß der erste Behälter (1,37) die Gestalt eines Beutels hat, der Teil eines Trennungssystems ist.

4. Behältersystem nach einem der vorhergehenden Ansprüche, dadurch gekennzeichnet, daß der zweite Behälter (49) die Gestalt eines weiteren Beutels oder einer weiteren Flasche hat.

5. Behältersystem nach Anspruch 4, dadurch gekennzeichnet, daß der erste (1,37) und zweite

(49) Behälter üblicherweise mittels eines geschlossenen Durchlasses (41,47) der die Behälter verbindet, agbetrennt sind.

6. Behältersystem nach Anspruch 5, dadurch gekennzeichnet, daß der geschlossene Durchlass (41,47), ein rohrförmiges Stück umfaßt.

7. Behältersystem nach einem der Ansprüche 3 bis 6, dadurch gekennzeichnet, daß der erste (1,37) und zweite (49) Behälter entsprechende Teile eines Trennungssystems sind.

8. Behältersystem nach einem der vorhergehenden Ansprüche, dadurch gekennzeichnet, daß der zweite Behälter (49) einen Plasma-Austauschstoff enthält.

9. Behältersystem nach Anspruch 1, dadurch gekennzeichnet, daß der erste Behälter (1,37) ein in einer Einheitskonstruktion enthaltener Beutel ist, wobei der erste Behälter (1,37), der zweite Behälter (49) und der die Behälter verbindende geschlossene Durchlass innerhalb einer einzelnen Bahn geschaffen sind.

10. Behältersystem nach Anspruch 1, dadurch gekennzeichnet, daß der erste Behälter (1,37) und der zweite Behälter (49) mittels eines Durchlasses (41,47) verbunden sind, der geschaffen ist aus einem flexiblen Material, wobei der Verschluß der Durchlasses durch eine ausserhalb der Konstruktion vorgesehene Druckklemme (45) beschaffen ist.

11. Behältersystem nach Anspruch 1, dadurch gekennzeichnet, daß der erste Behälter (1,37) und der zweite Behälter (49) mittels eines Durchlasses (41, 47) verbunden sind, der aus einem flexiblen Material beschaffen ist, wobei der Verschluß des Durchlasses durch eine zerbrechliche Membran (59) gebildet ist.

12. Behältersystem nach Anspruch 11, dadurch gekennzeichnet, daß der Durchlaß (41,47) eine rohrförmige Länge mit einem längsförmigen elastischen Abschnitt in der Nähe der Membran (59) umfaßt, und daß ein Teil zum Durchstossen der Membran innerhalb des Durchlasses und benachbart zur Membran vorgesehen ist.

13. Behältersystem nach einem der vorhergehenden Ansprüche, dadurch gekennzeichnet, daß der erste Behälter (1,37) Gesamtblut, eine dichte Blutzellenmasse oder in Plasma oder in einem Plasmaersatzmittel suspendierte Blutzellen enthält.

14. Behältersystem nach einem der vorhergehenden Ansprüche, dadurch gekennzeichnet, daß Verstärker für die Sauerstofffreisetzung 2-Ethoxy-6-(5-tetrazolyl)-xanthon, 2-(Hydroxyethoxy)-(5-tetrazolyl)xanthon, oder ein Salz einer dieser Verbindungen ist.

**Revendications**

1. Un dispositif ou système pour recevoir du sang qui comprend un premier récipient stérile scellé (1, 37) avec des moyens (19, 21) permettant l'introduction aseptique de sang et contenant un anti-coagulant, relié à un second récipient stérile scellé (49) qui contient une substance (51) permettant d'accroître la libération d'oxygène de l'oxyhèmoglobine, les contenus de ces deux récipients étant normalement séparés par des moyens (41, 45, 47) qui permettent, suivant les besoins, d'établir une continuité entre les intérieurs des récipients, système caractérisé en ce que la substance (51) du second récipient est un composé de formule I ci-dessous:

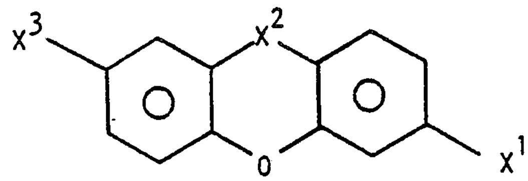
(I)

ou un sel d'un tel composé, formule dans laquelle:

$X^1$ désigne un groupe carboxyle ou 5-tétrazolyle,

$X^2$ le groupe carbonyle ou méthylène,

$X^3$ un hydroxyle ou un groupe $—X^4(C_nH_{2n})X^5$,

$X^4$ étant l'oxygène ou le soufre et

$X^5$ l'hydrogène ou un groupe $—OX^6$

$X^6$ étant l'hydrogène ou un alcanoyle en $C_1$ à $C_4$ ou encore un groupe $—(C_mH_{2m})X^7$,

$X^7$ désignant l'hydrogène ou un groupe $—OX^8$,

$X^8$ étant l'hydrogène ou un alcanoyle en $C_1$ à $C_4$, et m et n étant chacun, indépendamment l'un de l'autre, un entier de 1 à 4,

avec les conditions que si $X^5$ est un groupe $—OX^6$, n soit toujours supérieur à 1 et $X^4$ et $X^5$ soient liés à des atomes de carbone différents;

et que si $X^7$ est un groupe $—OX^8$, m soit toujours supérieur à 1 et aucun atome de carbone du radical $—(C_mH_{2m})—$ ne soit lié à deux atomes d'oxygène.

2. Système selon la revendication 1 caractérisé en ce que le premier récipient (1, 37) est un flacon ou un sac.

3. Système selon la revendication 1 ou 2, caractérisé en ce que le premier récipient (1, 37) est un sac constituant un élément d'un ensemble de séparation.

4. Système selon l'une quelconque des revendications précédentes, caractérisé en ce que le second récipient (49) est un autre sac ou flacon.

5. Système selon la revendication 4 dans lequel le premier récipient (1, 37) et le second (49) sont normalement séparés l'un de l'autre par un passage fermé (41, 47) qui les relie.

6. Système selon la revendication 5 caractérisé en ce que le passage fermé (41, 47) est constitué d'un morceau de tuyau.

7. Système selon l'une quelconque des revendications 3 à 6, caractérisé en ce que le premier récipient (1, 37) et le second (49) constituent des éléments respectifs d'un ensemble de séparation.

8. Système selon l'une quelconque des revendications précédentes, caractérisé en ce que le second récipient (49) contient également un produit de remplacement de plasma.

9. Système selon la revendication 1 caractérisé en ce que le premier récipient (1, 37) est un sac incorporé dans un ensemble unitaire dans lequel le premier récipient (1, 37), le second (49) et le

passage fermé (41, 47) qui relie ces récipients sont placés dans une seule pièce de sangle.

10. Système selon la revendication 1 caractérisé en ce que le premier récipient (1, 37) et le second (49) sont reliés entre eux par un passage (41, 47) en une matière souple, passage dont la fermeture se fait avec une pince extérieure (45) que l'on peut retirer.

11. Système selon la revendication 1 caractérisé en ce que le premier et le second récipients sont reliés entre eux par un passage (41, 47) en une matière souple, passage dont la fermeture est assurée par une membrane frangible (59).

12. Système selon la revendication 11 caractérisé en ce que le passage (41, 47) est un moreceau de tuyau dont une partie est élastique dans le sens de sa longueur près de la membrane (59) et qui comprend à l'intérieur, contigu à la membrane, un élément destiné à percer celle-ci.

13. Système selon l'une quelconque des revendications précédentes, caractérisé en ce que le premier récipient (1, 37) contient du sang entier, une masse de cellules sanguines ou des cellules sanguines en suspension dans du plasma ou dans un produit de remplacement de plasma.

14. Système selon l'une quelconque des revendications précédentes, caractérisé en ce que l'activant de la libération d'oxygène est la 2-éthoxy-6-(5-tétrazolyl)-xanthone, la 2-(2-hydroxyéthoxy)-6-(5-tétrazolyl-xanthone ou un sel de l'une de ces substances.

FIG. 1

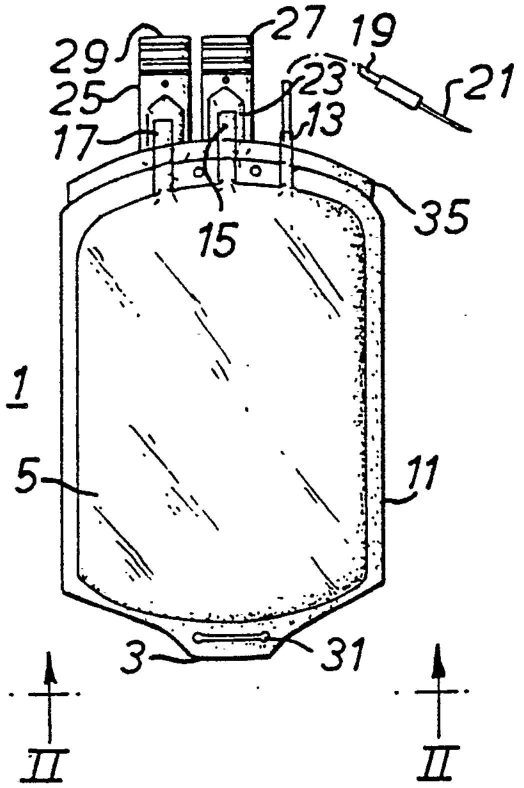


FIG. 2

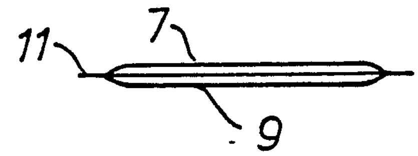


FIG. 3

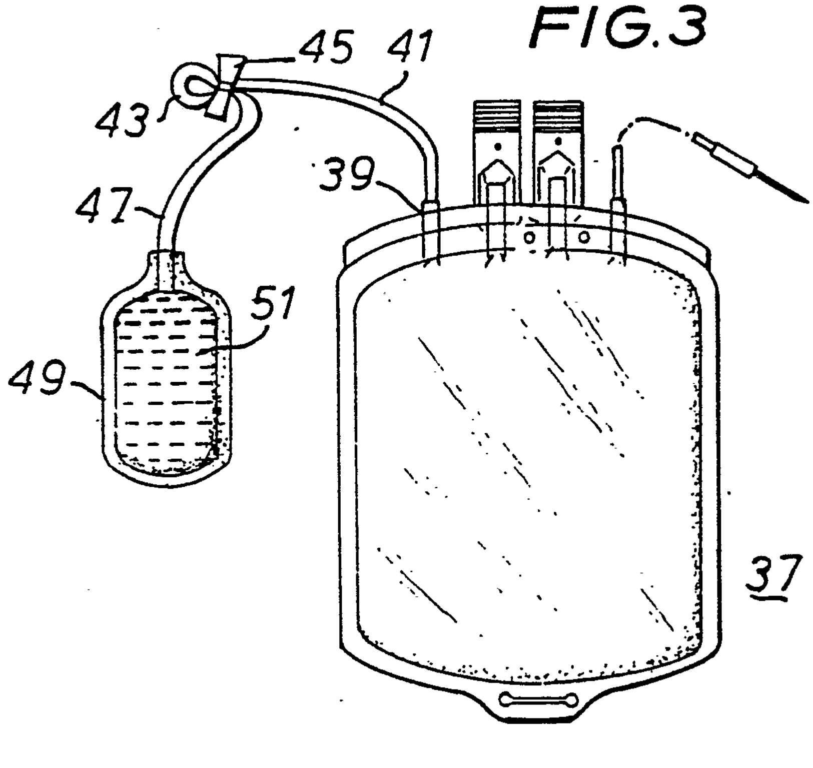

FIG. 4

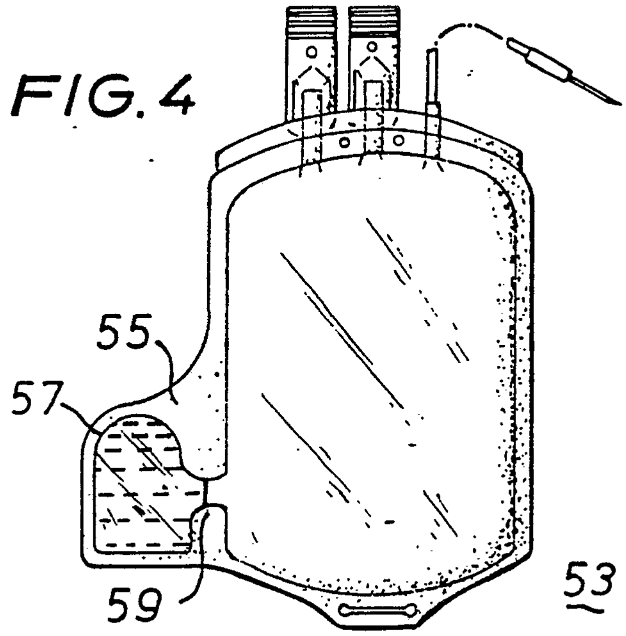


FIG. 6

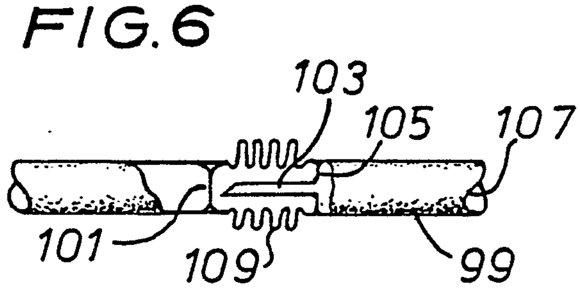

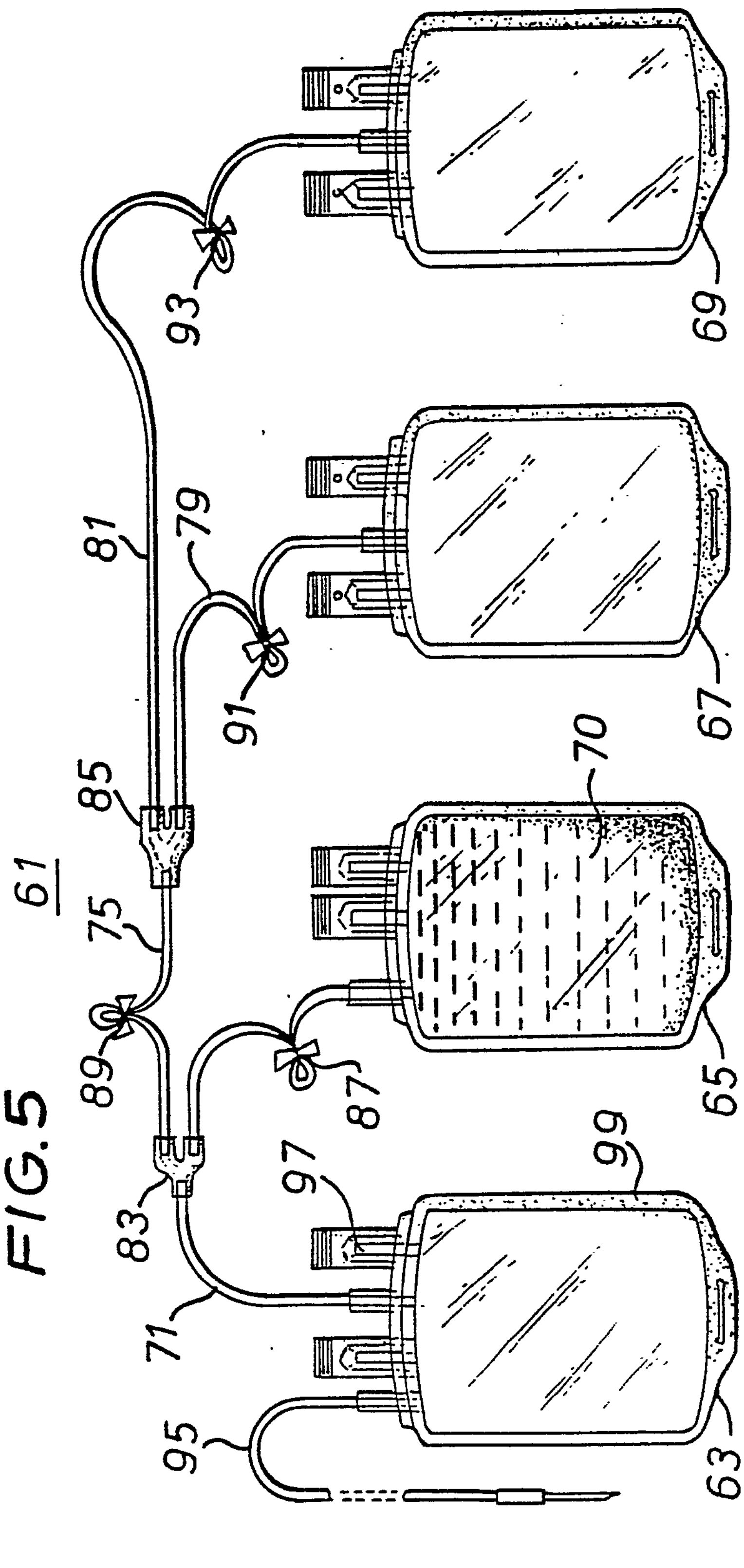
FIG.5
61
63
65
67
69
70
71
75
79
81
83
85
87
89
91
93
95
97
99